(19) Europäisches Patentamt
European Patent Office
Office européen des brevets

(11) **EP 0 578 150 B1**

(12) **EUROPÄISCHE PATENTSCHRIFT**

(45) Veröffentlichungstag und Bekanntmachung des Hinweises auf die Patenterteilung:
**19.05.1999 Patentblatt 1999/20**

(51) Int Cl.[6]: **G01S 17/10**, G04F 10/04, G01S 7/48

(21) Anmeldenummer: **93110602.5**

(22) Anmeldetag: **02.07.1993**

(54) **Einrichtung zur Messung von Pulslaufzeiten**

Apparatus for measuring the time of flight of pulses

Appareil de mesure du temps de vol d'impulsions

(84) Benannte Vertragsstaaten:
**DE FR GB**

(30) Priorität: **10.07.1992 DE 4222643**

(43) Veröffentlichungstag der Anmeldung:
**12.01.1994 Patentblatt 1994/02**

(73) Patentinhaber: **Bodenseewerk Gerätetechnik GmbH**
**88662 Überlingen (DE)**

(72) Erfinder: **Uwira, Bernd, Dr.**
**D-7750 Konstanz (DE)**

(74) Vertreter: **Wolgast, Rudolf, Dipl.-Chem. Dr. et al**
**Dipl.-Phys. Jürgen Weisse,**
**Dipl.-Chem. Dr. Rudolf Wolgast,**
**Postfach 11 03 86**
**42531 Velbert (DE)**

(56) Entgegenhaltungen:
**EP-A- 0 122 984          WO-A-89/01191**
**DE-A- 3 612 686**

**Beschreibung**

Die Erfindung betrifft ein Verfahren zum zeitlichen Erfassen von reflektierten Lichtimpulsen, die von einem Triggerimpuls ausgelöst und an einem Objekt reflektiert werden , wobei die rücklaufenden Lichtimpulse von einem Detektor erfaßt werden und Detektorsignale liefern, unter Verwendung einer Grobmeßeinrichtung, mittels derer ein Grobmeßwert für die Pulslaufzeit gewonnen wird, und einer Feinmeßeinrichtung.

Die Lichtimpulse werden beispielsweise von einem Laser ausgesandt. Aus der Laufzeitmessung zwischen vorlaufendem und rücklaufenden Pulsen, also Lichtblitzen, kann die Entfernung zu einem reflektierenden Objekt bestimmt werden.

Es ist bekannt, die Pulslaufzeit mit Analogtechnik zu messen. Zu diesem Zweck werden Rampenschaltungen verwendet. Das sind Schaltungen, die mit einem Integrator aufgebaut sind und eine linear mit der Zeit ansteigende Ausgangsspannung liefern. Die Rampenschaltungen werden durch einen Triggerimpuls gestartet. Der Triggerimpuls löst dann einen Lichtimpuls z. B. eines Lasers, aus. Der rücklaufende Lichtimpuls fällt auf einen Detektor. Der Detektor liefert ein Detektorsignal. Wenn dieses Detektorsignal einen durch eine Schwellenschaltung, praktisch einen Komparator, vorgegebenen Schwellwert überschreitet, wird ein Signal erzeugt, das die Rampenschaltung anhält, also den Anstieg der Ausgangsspannung unterbricht. Die so erhaltene Ausgangsspannung ist dann ein Maß für die Pulslaufzeit. Bei großen Pulslaufzeiten ergibt sich dann eine sehr hohe Genauigkeitsforderung für das analoge Rampensignal am Ausgang der Rampenschaltung. Um eine Zeitauflösung von 1 ns bei einer Pulslaufzeit von 50 µs zu erreichen, muß ein 5V - Rampensignal innerhalb von 1 ns mit mindestens 20 µV aufgelöst werden. Das entspricht einem Dynamikbereich von 110 dB oder etwa 19 Bit. Das erfordert einschließlich der erforderlichen Stabilisierungsmaßnahmen einen sehr hohen Aufwand.

Es ist weiterhin bekannt, die Messung der Pulslaufzeit mit Digitaltechnik durchzuführen. Dabei werden Zählsignale konstanter und stabiler Frequenz in einem Zähler gezählt. Der Zähler wird durch den Triggerimpuls gestartet und durch das vom rücklaufenden Lichtimpuls am Detektor erzeugte Signal angehalten. Bei einer solchen Einrichtung entstehen Ungenauigkeiten durch den Zähleranlauf. Um die geforderte Auflösung zu erreichen, muß der Zähler mit einer sehr hohen Taktfrequenz im Gigahertz-Bereich arbeiten. Auch das erfordert einschließlich der Stabilisierungsmaßnahmen einen sehr hohen Aufwand.

Die DE-A-3 322 145 beschreibt eine Vorrichtung zur Messung der Pulslaufzeit von Lichtimpulsen bei elektro-optischen Entfernungsmessern. Ein Grobmeßzähler mißt Taktperioden eines Referenzoszillators. Ein Feinmeß-Interpolator stellt Restzeiten zu Beginn und am Ende des Meßintervalls fest.

Die WO-A-89 01191 und die DE-A-2 612 686 beschreiben ähnlich arbeitende Vorrichtungen zur Messung von Zeitintervallen, bei welchen die Analogtechnik und die Digitaltechnik miteinander kombiniert werden. Das zu messende Zeitintervall wird digital mittels eines Grobmeßzählers erfaßt, indem Taktimpulse während des Zeitintervalls gemessen werden. Die Dauer zwischen dem Anfang des Zeitintervalls und dem ersten in dem Zeitintervall fallenden Taktimpuls sowie die Dauer zwischen dem letzten in dem Zeitintervall fallenden Taktimpuls wird analog durch eine erste und eine zweite Rampenschaltung ermittelt. Die drei so ermittelten Zeitabschnitte werden dann addiert.

Bei pulserzeugenden Systemen wie Lasern können die Lichtimpulse, die durch einen Triggerimpuls ausgelöst werden, ein hohes Jitter-Verhalten aufweisen. Dadurch ist der tatsächliche Lichtimpulsabgang mit einer Unsicherheit behaftet. Diese Unsicherheit führt zu Meßfehlern in der Pulslaufzeit. Eine weitere Fehlerquelle liegt bei der Auswertung von einzelnen Lichtimpulsen in der Amplitude des rücklaufenden Lichtimpulses. Es besteht das Problem, den Meßpunkt auf der Flanke des gesendeten Lichtimpulses auf der Flanke des rücklaufenden Lichtimpulses wiederzufinden. Schließlich kann die Form des reflektierten Lichtimpulses Schlüsse auf die Struktur des Objekts ermöglichen, an welchem der ausgesandte Lichtimpuls reflektiert wurde.

Der Erfindung liegt die Aufgabe zugrunde, lange Pulslaufzeiten mit preisgünstiger Standardelektronik aber trotzdem hoher Genauigkeit zu messen.

Der Erfindung liegt weiter die Aufgabe zugrunde, den Verlauf des rücklaufenden Lichtimpulses zu erfassen.

Erfindungsgemäß wird diese Aufgabe mit einem Verfahren der eingangs genannten Art dadurch gelöst, daß

(a) ein Feinmeß-Triggerimpuls erzeugt wird, der einen von dem Objekt reflektierten Feinmeß-Lichtimpuls auslöst,

(b) eine Mehrzahl von analogen Rampenschaltungen gleichzeitig nach einem von dem Grobmeßwert bestimmten, durch den Feinmeß-Triggerimpuls eingeleiteten Zeitintervall gestartet werden, wobei das Zeitintervall kleiner als der Grobmeßwert ist und der Arbeitsbereich der Rampenschaltung den Grobmeßwert enthält, und

(c) die Ausgangssignale der Rampenschaltungen gespeichert werden, wenn das von dem rücklaufenden Feinmeß-Lichtimpuls erzeugte Detektorsignal einen jeweils vorgegebenen Schwellwert überschreitet, wobei den verschiedenen Rampenschaltungen unterschiedliche, gestufte Schwellwerte zugeordnet sind.

Für die Messung der Pulslaufzeit wird zunächst ein Grobmeßwert bestimmt. Die Rampenschaltungen werden dann mit einer Verzögerung gegen den Triggerimpuls gestartet. Die Verzögerung erfolgt um ein Zeitintervall, das mit dem Triggerimpuls beginnt und kleiner als der Grobmeßwert ist. Der Arbeitsbereich der Rampenschaltung enthält den Grobmeßwert. Der mittels der Rampenschaltung bestimmte Feinmeßwert kann dann von dem Grobmeßwert nach oben oder nach unten abweichen. Es werden nun durch die Rampenschaltungen verschiedene Amplitudenwerte des Impulsverlaufs erfaßt, die durch die gestuften Schwellwerte vorgegeben sind. Daraus kann der zeitliche Verlauf des reflektierten Lichtimpulses bestimmt werden.

Aus diesem Verlauf kann man einander zugeordnete Punkte des ausgesandten und des reflektierten Lichtimpulses bestimmen und die Genauigkeit der Pulslaufzeit-Messung verbessern.

Es ist aber auch möglich, aus der Form des reflektierten Lichtimpulses, wie sie sich aus den Ansprechzeitpunkten der verschiedenen Rampenschaltungen ergibt, auf die Art des reflektierenden Objekts oder die Objektszene zu schließen. Eine ebene Fläche senkrecht zur Strahlrichtung läßt den zeitlichen Verlauf, d.h. die Form des Lichtimpulses bei der Reflexion im wesentlichen unverändert. Eine Neigung einer diffus reflektierenden Fläche führt zu einer Verbreiterung des reflektierten Lichtimpulses relativ zu dem ausgesandten Lichtimpuls. Eine Stufe führt ggf. zu einem Lichtimpuls mit mehreren Peaks, wobei der Abstand der Peaks ein Maß für die Tiefe der Stufe liefert.

Eine Vorrichtung zum zeitlichen Erfassen von reflektierten Lichtimpulsen, die von einem Triggerimpuls ausgelöst und an einem Objekt reflektiert werden, bei welcher die rücklaufenden Lichtimpulse von einem Detektor erfaßt werden und Detektorsignale liefern, mit einer Grobmeßeinrichtung, mittels derer ein Grobmeßwert für die Pulslaufzeit gewonnen wird, und einer Feinmeßeinrichtung, ist erfindungsgemäß gekennzeichnet durch

(a) Mittel zur Erzeugung eines Feinmeß-Triggerimpulses und eine von dem Feinmeß-Triggerimpuls auslösbare gepulste Lichtquelle zur Erzeugung eines von dem Objekt reflektierten Feinmeß-Lichtimpulses,

(b) eine Mehrzahl von analogen Rampenschaltungen, die gleichzeitig nach einem von dem Grobmeßwert bestimmten, durch den Feinmeß-Triggerimpuls eingeleiteten Zeitintervall einschaltbar sind, wobei das Zeitintervall kleiner als der Grobmeßwert ist und der Arbeitsbereich der Rampenschaltung den Grobmeßwert enthält, und

(c) Speichermittel zum Speichern der Ausgangssignale der Rampenschaltungen zu dem Zeitpunkt, wenn das von dem rücklaufenden Feinmeß-Lichtimpuls erzeugte Detektorsignal einen jeweils vorgegebenen Schwellwert überschreitet, wobei den verschiedenen Rampenschaltungen unterschiedliche, gestufte Schwellwerte zugeordnet sind.

Ausgestaltungen der Erfindung sind Gegenstand der Unteransprüche.

Ein Ausführungsbeispiel der Erfindung ist nachstehend unter Bezugnahme auf die zugehörigen Zeichnungen näher erläutert.

Fig.1 ist ein Blockschaltbild einer Einrichtung zur Messung von Pulslaufzeiten.

Fig.2 zeigt die verschiedenen auftretenden Signale als Funktion der Zeit.

Fig.3 veranschaulicht das Auftreten von "Jitter", d.h. einer undefinierten Verzögerung zwischen dem auslösenden Triggerimpuls und dem von dem Laser gelieferten Lichtimpuls.

Fig.4 veranschaulicht die für aufeinanderfolgende Lichtimpulse unterschiedliche Verzögerung zwischen dem Triggerimpuls und den Lichtimpulsen und zeigt verschiedene Formen der rücklaufenden Impulse.

Fig.5 veranschaulicht die Bestimmung der Form des rücklaufenden Lichtimpulses aus den Rampenspannungen.

Fig.6 zeigt eine Möglichkeit, den Meßbereich durch zusätzliche Rampenschaltungen zu erweitern, die zeitversetzt gestartet werden.

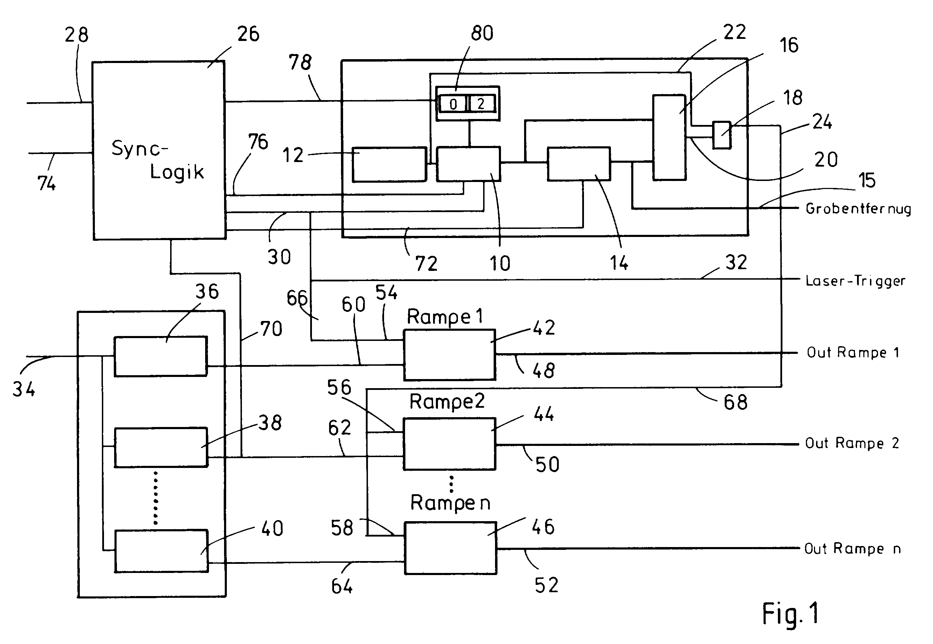

In Fig. 1 ist mit 10 ein freilaufender Zähler bezeichnet. Der Zähler 10 erhält Zählsignale von einem stabilisierten Taktgeber 12. Der Zähler hat eine Zählkapazität von 10 Bit. Der Taktgeber liefert eine Taktfrequenz von 15 MHz. Das ist mit relativ einfachen Mitteln zu realisieren. Der Zählerstand ist in einen Speicher 14 übertragbar. Der in dem Speicher 14 gespeicherte Zählerstand wird an einem Ausgang 15 als Grobentfernung ausgegeben. Ein Komparator 16 vergleicht den aktuellen Zählerstand des Zählers 10 und den in dem Speicher 14 gespeicherten Zählerstand. Ein Flip-Flop 18 ist mit einem Eingang 20 mit dem Ausgang des Komparators 16 und mit einem zweiten Eingang 22 mit dem Taktgeber 12 verbunden. Das Flip-Flop 18 liefert an einem Ausgang 24 ein Ausgangssignal L oder logisch null, solange der Zählerstand des Zählers 10 kleiner als der in dem Speicher 14 gespeicherte Zählerstand ist. Das Ausgangssignal an dem Ausgang 24 wird H oder logisch eins, wenn der Zählerstand des Zählers 10 den im Speicher 14 gespeicherten Zählerstand erreicht.

Mit 26 ist eine Synchronisations-Logik bezeichnet. Die Synchronisations-Logik 26 erhält an einem Eingang 28 einen Reset- und Startimpuls. Dieser Reset- und Startimpuls wird durch die Synchronisations-Logik 26 mit den Zählsignalen des Taktgebers 12 synchronisiert. Dadurch wird ein Triggersignal an einem Ausgang 30 erzeugt. Das Triggersignal wird über Leitung 32 einem (nicht dargestellten) Laser zugeführt. Das Triggersignal erzeugt an dem Laser einen Lichtimpuls in Form eines Laser-Lichtblitzes. Dieser Lichtimpuls durchläuft einen Weg zu einem Objekt, wird von dem Objekt reflektiert und fällt als rücklaufender Lichtimpuls auf einen (ebenfalls nicht dargestellten) Detektor. Der Detektor erzeugt ein Detektorsignal an einem Eingang 34.

Das Detektorsignal liegt an einer Mehrzahl (n) von Schwellenschaltungen 36, 38, ... 40 an. Die Schwellenschaltungen 36 bis 40 sind praktisch Komparatoren, welche das Detektorsignal mit anliegenden Referenzspannungen als Schwellwerten vergleichen. Die Referenzspannungen sind abgestuft.

Den Schwellenschaltungen 36, 38, ... 40 sind je eine Rampenschaltung 42, 44, ... 46 zugeordnet. Die Rampenschaltungen 42, 44, ... 46 sind praktisch Integratoren, die mit einer konstanten Eingangsspannung ein linear ansteigendes Ausgangssignal, ein Rampensignal, an Ausgängen 48, 50,...52 erzeugen. Die Rampenschaltungen 42, 44, .. 46 können über ein Signal an einem ersten Eingang 54, 56, ... 58 gestartet werden, so daß das Ausgangssignal mit konstanter Anstiegsrate anzusteigen beginnt. Durch ein Signal an einem zweiten Eingang 60, 62, ... 64 wird das Rampensignal angehalten, so daß der Anstieg unterbrochen ist und am Ausgang 48, 50, .. 52 ein konstantes Ausgangssignal erscheint. Dieses konstante Ausgangssignal ist ein Maß für die Zeitdifferenz zwischen den Signalen an dem ersten und dem zweiten Eingang, z.B. 54, 60, der Rampenschaltung, z.B. 42.

Der erste oder "Start"-Eingang 54 der Rampenschaltung 42 ist über eine Leitung unmittelbar von dem Triggersignal am Ausgang 30 der Synchronisations-Logik 26 beaufschlagt. Der zweite oder "Stop"-Eingang 60 der Rampenschaltung 42 ist von dem Signal am Ausgang der Schwellenschaltung 36 beaufschlagt.

Bei den übrigen Rampenschaltungen 44, ... 46 sind jeweils die ersten oder "Start"-Eingänge 56,... 58 über eine Leitung 68 mit dem Ausgang 24 des Flip-Flops 18 verbunden. Die zweiten oder "Stop"-Eingänge 62,... 64 sind mit den Ausgängen je einer Schwellenschaltung 38, ... 40 verbunden.

Der Ausgang der zweiten Schwellenschaltung 38 ist über eine Leitung 70 mit der Synchronisations-Logik 26 verbunden. Die Synchronisations-Logik liefert bei "Grobmessung", wie noch beschrieben wird, über eine Leitung 72 ein Signal an den Speicher 14. Dadurch wird die Übernahme des Zählerstandes des Zählers 10 in den Speicher 14 ausgelöst.

An einem Eingang 74 erhält die Synchronisations-Logik 26 Kommandos, die zunächst eine Grobmessung der Pulslaufzeit mit einem ersten Lichtimpuls des Lasers und unmittelbar danach eine Feinmessung der Pulslaufzeit mit einem zweiten Lichtimpuls des Lasers einleiten.

Bei der Grobmessung der Pulslaufzeit ist nur die digitale Elektronik aktiv. Durch den Triggerimpuls am Ausgang 30 der Synchronisations-Logik 26 wird der Zähler 10 auf null zurückgestellt. Bei Auftreten des Signals von dem rücklaufenden Lichtimpuls an der zweiten Schwellenschaltung 28 wird über Leitung 70 und Leitung 72 die Übernahme des Zählerstandes in den Speicher 14 eingeleitet.

Es erfolgt dann eine Umschaltung am Eingang 74 auf "Feinmessung". Es erscheint ein "Voreinstellsignal" an einem Ausgang 76 der Synchronisations-Logik 26. Außerdem wird über einen Ausgang 78 der Synchronisations-Logik 26 ein Aktivierungssignal erzeugt, durch welches ein Sollwertgeber 80 aktiviert wird. Wenn jetzt der Triggerimpuls am Ausgang 30 der Synchronisations-Logik 26 erscheint, dann wird der Lichtimpuls an dem Laser ausgelöst. Gleichzeitig wird der Zähler 10 zurückgestellt. Der Zähler 10 wird aber nicht auf den Wert null zurückgestellt sondern auf den Wert "02", der durch den Sollwertgeber 80 vorgegeben ist. Der Zähler 10 zählt jetzt hoch, bis er den im Speicher 14 gespeicherten, vorherigen Zählerstand erreicht hat. Dann spricht der digitale Komparator 16 an und stößt das Flip-Flop 18 an. Das Flip-Flop 18 liefert einen Impuls an den ersten oder "Start"-Eingängen 56,...58 der Rampenschaltungen 44,...46. Die Rampenschaltungen 44,...46 laufen gleichzeitig in gleicher weise hoch. Die Rampenschaltung 42 ist schon durch den Triggerimpuls über Leitung 66 angestoßen worden. Die erste Rampenschaltung 42 wird durch das Ausgangssignal der ersten Schwellenschaltung 36 angehalten. Das Ausgangssignal der ersten Schwellenschaltung 36 wird von dem Detektorsignal angesteuert, das unmittelbar von dem ausgesandten Lichtimpuls, also dem ausgesandten Lichtblitz des Lasers, hervorgerufen wird. Die Rampenschaltung 42 liefert daher ein Signal, das den Jitter, also die Verzögerung zwischen dem Triggerimpuls und dem tatsächlich ausgesandten Lichtblitz mißt und zu berücksichtigen gestattet.

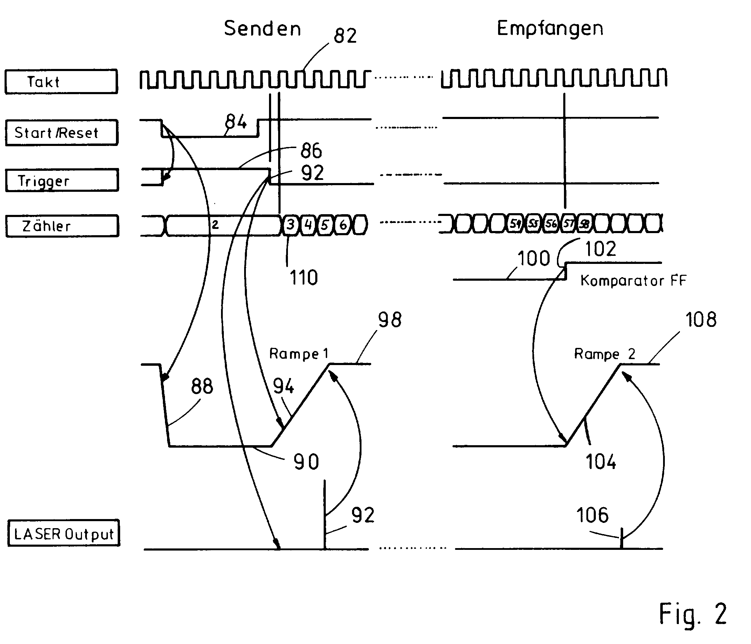

Die Signale sind in Fig.2 als Funktion der Zeit dargestellt.

Kurve 82 in Fig.2 zeigt die Taktimpulse. Auf den Eingang 28 der Synchronisations-Logik 26 wird ein Start- und Reset-Signal 84 aufgeschaltet. Das Start- und Reset-Signal 84 ist, wie aus Fig.2 ersichtlich ist, nicht mit den Taktimpulsen 82 synchronisiert. Die Synchronisations-Logik 26 erzeugt aus dem Start- und Reset-Signal 84 ein Triggersignal 86. Die rückwärtige Flanke des Triggersignals 86 fällt mit der rückwärtigen Flanke eines Zählimpulses zusammen.

Das Ausgangssignal der Rampenschaltung 42 wird durch die Vorderflanke des Triggerimpulses 86, die mit der abfallenden Flanke des Start- und Reset-Signals 84 zusammenfällt, zurückgesetzt. Das ist in Fig.2 durch die Flanke 88 des Ausgangssignals 90 der ersten Rampenschaltung 42 dargestellt. Das Ausgangssignal der ersten Rampenschaltung 42 wird auf null gehalten, solange der Triggerimpuls 86 ansteht. Mit der rückwärtigen Flanke 92 des Triggerimpulses 86 wird der Anstieg 94 des Ausgangssignals der Rampenschaltung 42 freigegeben.

Die rückwärtige Flanke 92 des Triggerimpulses 86 löst gleichzeitig den Lichtimpuls des Lasers aus. Dieser Lichtimpuls des Lasers ist in Fig.2 mit 96 bezeichnet. Wie aus Fig.2 ersichtlich ist, ist der Lichtimpuls 96 etwas gegenüber der Rückflanke 92 des Triggerimpulses 86 verzögert. Der Lichtimpuls des Lasers beaufschlagt unmittelbar den Detektor. Dadurch spricht die Schwellenschaltung 36 an. Das Ausgangssignal der Schwellenschaltung 36 am Eingang 60 der Rampenschaltung 42 unterbricht den weiteren Anstieg des Ausgangssignals der Rampenschaltung 42. Am Ausgang 48 der Rampenschaltung 42 erscheint ein konstantes Signal, das in Fig.2 durch den horizontalen Signalverlauf 98 dargestellt ist. Dieses konstante Signal ist proportional der Zeitdifferenz zwischen der rückwärtigen Flanke des Triggerimpulses 86 und dem Auftreten des Lichtimpulses 92 des Lasers.

Die Ausgangssignale der Rampenschaltungen 44, ... 46 werden durch das Ausgangssignal 100 (Fig.2) des Flip-Flops 24 in dem Zustand null gehalten, solange der Zählerstand des Zählers 10 nicht den im Speicher 14 bei der Grobmessung gespeicherten Zählerstand erreicht hat. Die Rampenschaltungen 44, ... 46 werden daher auch nicht von dem direkt den Detektor beaufschlagenden Lichtimpuls 93 des Lasers beeinflußt. Wenn der Zählerstand des Zählers 10 den im Speicher 14 gespeicherten Zählerstand erreicht, geht der Ausgang 24 des Flip-Flops 18 in den Zustand H, d. h. logisch eins. Das ist in Fig.2 durch die Flanke 102 dargestellt. Dadurch werden die Rampenschaltungen 44, ... 46 gestartet. Die Ausgangssignale an den Ausgängen 50, ... 52 steigen linear an. Das ist in Fig.2 anhand des Signalverlaufes 104 für die Rampenschaltung 44 dargestellt. Bei Erscheinen des rücklaufenden Lichtimpulses 106 wird dieser Anstieg des Signalverlaufes unterbrochen. An der Rampenschaltung 44 steht dann ein konstantes Signal an, das in Fig.2 durch den waagerechten Teil 108 des Signalverlaufes dargestellt ist.

Dadurch, daß vor der Feinmessung der Zähler 10 nicht auf null sondern auf einen endlichen Zählerstand, beispielsweise 02 zurückgestellt wurde, erreicht der Zähler 10 den im Speicher 14 gespeicherten Zählerstand entsprechend früher als bei der Grobmessung. Die Rampenschaltungen 44, ... 46 werden daher gestartet, bevor die mit der Grobmessung bestimmte Pulslaufzeit abgelaufen ist. Es kann dadurch erreicht werden, daß die mit der Grobmessung bestimmte Pulslaufzeit etwa in der Mitte des Arbeitsbereiches der Rampenschaltungen 44, ... 46 liegt, also des Bereiches, in welchem ein linearer Anstieg des Ausgangssignals erfolgt. In diesem linearen Arbeitsbereich erscheint dann auch der rücklaufende Lichtimpuls. Die Pulslaufzeit des Lichtimpulses, wie sie mit der Feinmessung gemessen wird, kann dann gegenüber der Pulslaufzeit der Grobmessung sowohl nach oben als auch nach unten abweichen.

In Fig.2 sind durch Kurve 110 die Zählerstände des Zählers 10 dargestellt. Während der Dauer des Triggerimpulses 86 ist der Zählerstand auf "02" gehalten. Nach der Rückflanke des Triggerimpulses stellt der nächste Zählimpuls 82 den Zähler 10 auf "03". Der Zähler 10 zählt dann die Zählimpulse weiter mit "04", "05" usw. Wenn man einmal annimmt, daß bei der Grobmessung "66" Zählimpulse gezählt wurden, dann wird das Flip-Flop 18 von der Rückflanke "64." Zählimpulses nach der Rückflanke des Triggerimpulses 86 umgeschaltet. Dieser entspricht nämlich der Zählung "66".

Aus der Grobentfernung am Ausgang 15, dem digitalisierten Ausgangssignal 98 der Rampenschaltung 42 und dem digitalisierten Ausgangssignal 108 der Rampenschaltung 44 (oder einer der Rampenschaltungen 44, ... 46) wird ein sehr genauer Meßwert für die Pulslaufzeit des von dem Laser ausgesandten Lichtimpulses 93 gewonnen.

Die Schwellenschaltungen 38, ... 40 haben unterschiedlich hohe Schwellen. Dadurch sprechen die Schwellenschaltungen 38,...40 zu unterschiedlichen Zeitpunkten an, wenn der rücklaufende Lichtimpuls 106 -üblicherweise- eine Flanke mit endlicher Steilheit hat. Aus den Zeitdifferenzen können Rückschlüsse auf die Form des rücklaufenden Lichtimpulses gezogen werden. Es kann dann auch diejenige Rampenschaltung 44, ... 46 zur Laufzeitmessung herangezogen werden, deren Schwelle am besten der für die Bestimmung des Aussendezeitpunktes bestimmenden Amplitude des ausgesandten Lichtimpulses, z.B. dem Halbwertpunkt, entspricht.

Der digitale Teil der Schaltung ist in ECL-Technik ausgeführt, da die TTL-Technik nicht die erforderliche Schnelligkeit und Flankensteilheit ermöglicht. Die Rampenschaltungen sind eigene Module mit Temperaturkompensation. Die Rampenschaltungen sind schnelle Integratoren, die mit extrem schnellen FETs geschaltet werden. Nachdem der Anstieg des Ausgangssignals der Rampenschaltungen unterbrochen worden ist, werden die Werte von Analogwertspeichern (Sample-Hold-Stufen) übernommen und so bis zur Ausgabe gespeichert.

Die Grobmessung braucht im allgemeinen nicht bei jedem Feinmeßvorgang wiederholt zu werden, auch wenn sich das reflektierende Objekt bewegt. Es genügt zunächst eine Grobmessung, durch welche den Arbeitsbereich der Rampenschaltungen in den Bereich des Grobmeßwertes gelegt werden kann. Es kann dann die Lage des reflektierenden Objekts in dem Arbeitsbereich der Rampenschaltungen beobachtet werden. Wenn die Lage des Objekts sich zu weit aus der Mitte des Arbeitsbereichs herausbewegt, kann die daraus erhaltene Abstands information benutzt werden, um die Lage des Arbeitsbereiches der Rampenschaltungen zu verlagern, d.h. die Rampenschaltungen um eine definierte Zeitspanne früher oder später zu starten. Es kann aber auch in einem solchen Fall nochmals eine Grobmessung mit den beschriebenen Techniken ausgelöst werden.

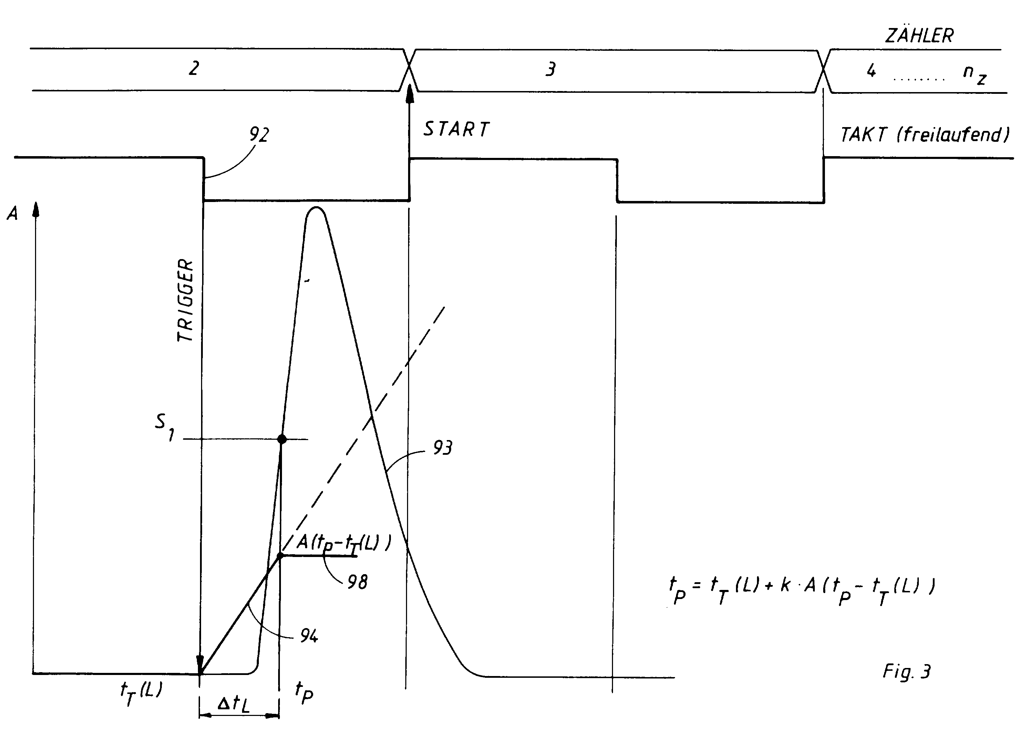

Fig.3 veranschaulicht noch einmal die Verzögerung zwischen dem Triggerimpuls und dem von dem Laser erzeugten Lichtimpuls 93. Der zeitliche Verlauf des Lichtimpulses ist dabei in Fig.3 gedehnt dargestellt. Der Schwellwert $S_1$ ist dabei so gelegt, daß er etwa der halben Höhe des Lichtimpulses 93 entspricht. Bei Erreichen dieses Schwellwertes $S_1$ wird die Rampenschaltung 42 angehalten. Die so erhaltene Rampenspannung ist A. Die Zeit $t_P$ der Aussendung des Lichtimpulses 93 wird dann

$$t_P = t_T + 1/k * A.$$

Darin ist k die Rampensteigung und $t_T$ der Zeitpunkt der Rückflanke 92. Die Verzögerung $\Delta t_L = t_P - t_T$ ist bei den hier zu verwendenden Hochleistungs-Lasern schwankend und nicht zu vernachlässigen.

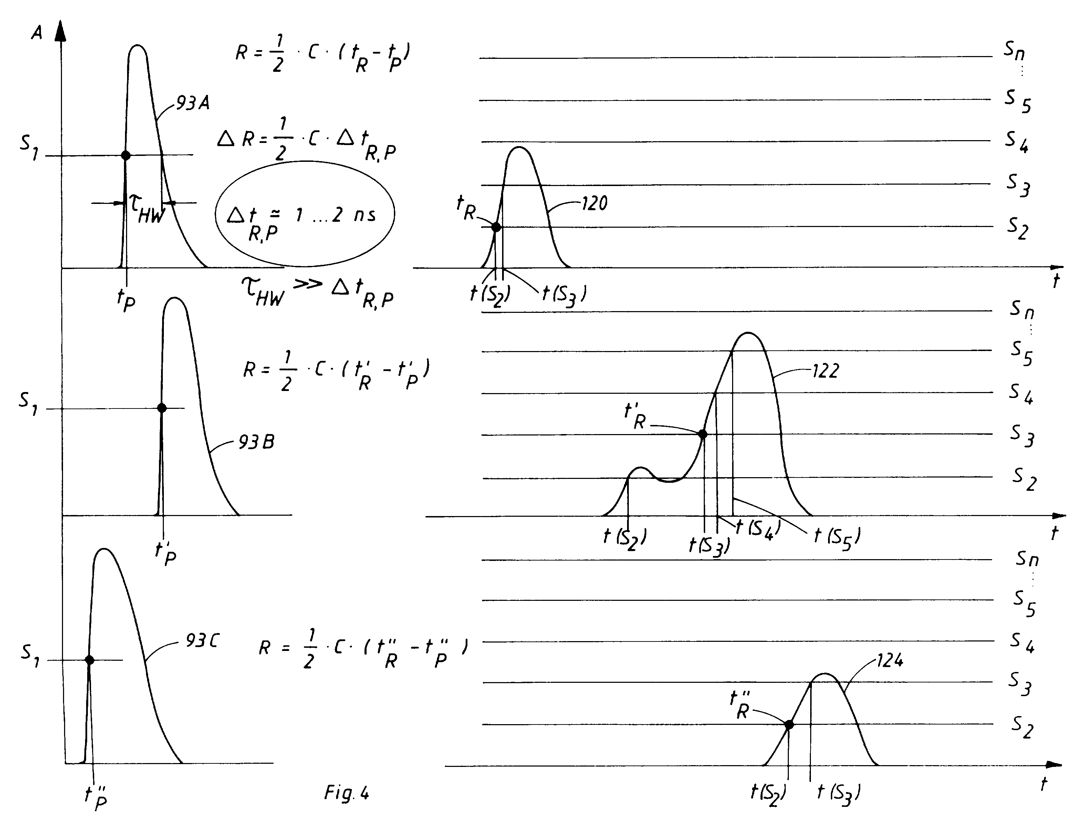

Fig.4 zeigt verschiedene von dem Laser ausgesandte Lichtimpulse 93A, 93B und 93C, wobei der Koordinatenursprung jeweils dem Zeitpunkt der Rückflanke 92 entspricht. Der Schwellwert $S_1$ liefert unterschiedliche Aussende-Zeiten $t_P$, $t_P'$ und $t_P''$. Fig.4 zeigt auch verschiedene rücklaufende Lichtimpulse 120, 122 und 124. Die verschiedenen rücklaufenden Lichtimpulse haben je nach Laufdauer und Art der Reflexion unterschiedliche Impulshöhen und Impulsformen. Als Rückkehrzeit $t_R$ bzw. $t_R'$ oder $t_R''$ des rücklaufenden Impulses wird dabei wieder die Zeit bestimmt, die der halben Höhe des rücklaufenden Impulses 120, 122 oder 124 entspricht. Diese Zeit wird mit Hilfe der verschiedenen Schwellwerte $S_2$, $S_3$, $S_4...S_n$ der Schwellenschaltungen 38 ... 40 ermittelt. Die Strecke R zu dem den Lichtimpuls reflektierenden Objekt ergibt sich zu

$$R = 1/2 * c * (t_R - t_P).$$

Die Laufzeit $\Delta t_{RP} = t_R - t_P$ liegt üblicherweise in der Größenordnung von 1 bis 2 ns.

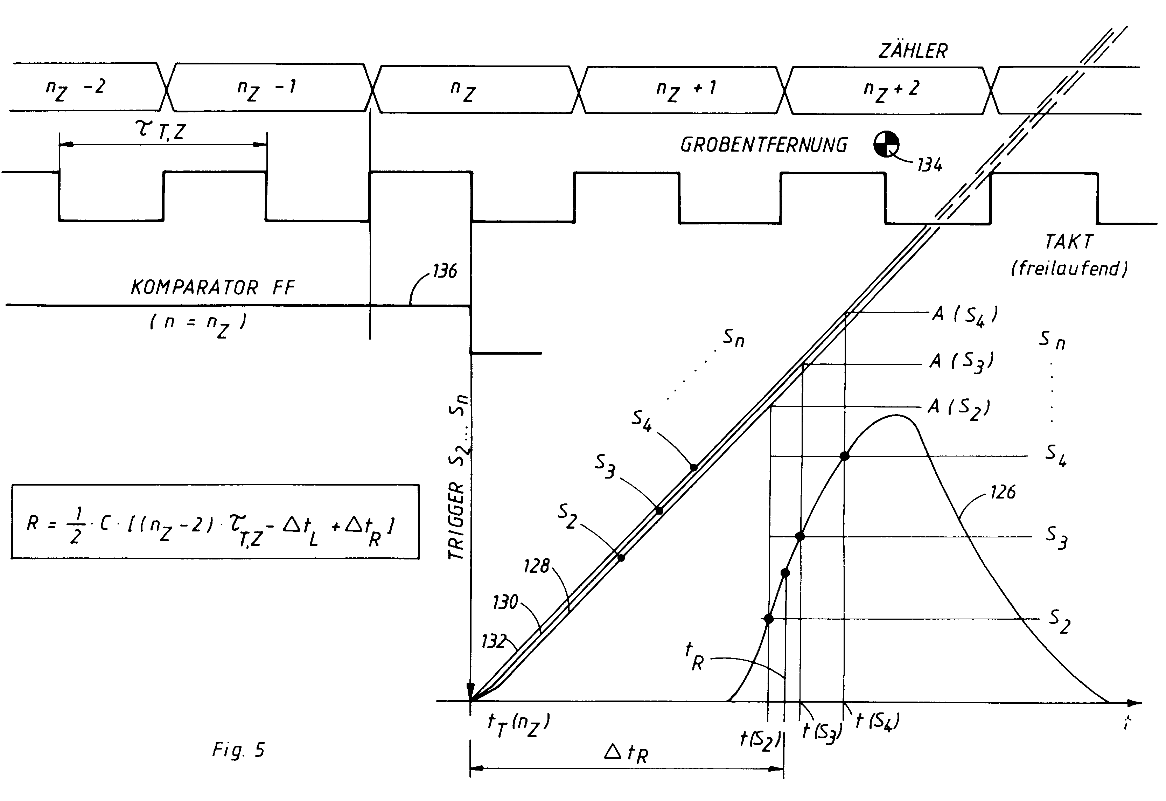

Fig.5 veranschaulicht, wie aus den Schwellwerten $S_2 ... S_n$ und den zugehörigen Rampenwerten A $(S_2) .. A(_n)$ der zeitliche Verlauf des rücklaufenden Lichtimpulses 126 bestimmt werden kann. In Fig.5 sind mit 126, 128 und 130 die -im wesentlichen zusammenfallenden- Rampenfunktionen der Rampenschaltungen 44... bezeichnet, die den Schwellwerten $S_2$, $S_3$ und $S_4$ zugeordnet sind. Bei Erreichen der Schwellwerte $S_2$ usw. liefern die Rampenschaltungen Ausgangssignale $A(S_2)$, $A(S_3)$ und $A(S_4)$. Aus diesen Ausgangssignalen $A(S_2)$ ... können anhand der Rampenfunktionen 128, 130 und 132 die Zeitpunkte t $(S_2)$, $t(S_3)$ und $t(S_4)$ bestimmt werden, zu denen diese Ausgangssignale $A(S_2)$, $A(S_3)$ bzw. $A(S_4)$ erreicht wurden. Daraus kann der zeitliche Verlauf des Lichtimpulses 126 rekonstruiert werden.

Unmittelbar ist dieser Verlauf wegen der kurzen Dauer des Lichtimpulses 126 nicht zu messen. Aus diesem Verlauf kann auch der Zeitpunkt $t_R$ bestimmt werden, der dem Zeitpunkt $t_P$ entspricht und als Rückkehrzeit angesehen werden soll.

Fig.5 veranschaulicht auch in Verbindung mit Fig.3 den Meßvorgang. Mit 134 ist in Fig.5 die Grobentfernung bezeichnet, die bei einer vorhergehenden Grobmessung bestimmt worden war. Da der Zähler vor der Feinmessung auf einen Zählerstand "2" gesetzt worden war, entspricht diese Grobentfernung einem Zählerstand $n_z + 2$ bei Rückkehr des Impulses. Der Flipflop 18 schaltet bei dem Zählerstand $n_z$ um, wie in Fig.5 durch Kurve 136 dargestellt ist. Dadurch werden die Rampenschaltungen 44 ... 46 gestartet. Das ist durch die Kurven 128, 130 und 132 dargestellt. Die Entfernung des reflektierenden Objekts ergibt sich dann zu

$$R = 1/2 * c \left[ (n_z - 2) * \tau - t_L + t_R \right].$$

Dabei ist $\tau$ die Periodendauer des Taktes.

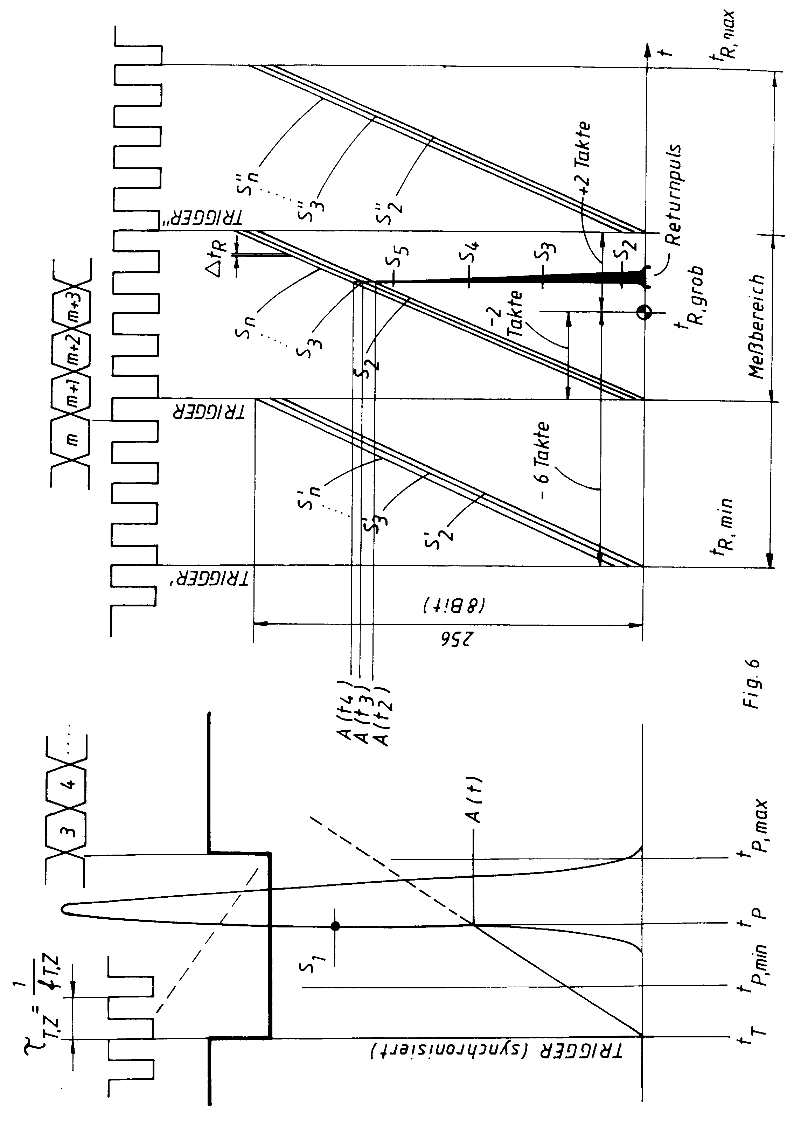

Fig.6 zeigt eine Möglichkeit der Erweiterung des Meßbereiches, wenn sich die Entfernung des Zieles ändert und nicht jedesmal eine neue Grobmessung vorgenommen werden soll. Dabei werden verschiedene Gruppen von Rampenschaltungen zu verschiedenen Zeitpunkten inbezug auf den Grobmeßwert $t_{R,grob}$ gestartet. Dann wird, wie in Fig.6, ein Meßbereich zwischen einer Laufzeit $t_{R,min}$ bis $t_{R,max}$ aus drei Teil-Meßbereichen zusammengesetzt, die je vier Takte umfassen. Der Meßbereich erstreckt sich von minus sechs Takten bezogen auf den Grobmeßwert $t_{R,grob}$ bis zu plus sechs Takten. Jeder Teil-Meßbereich wird durch einen Satz von Rampenschaltungen erfaßt, die jeweils bei Überschreitung eines Schwellwertes $S_2 .. S_n$ bzw. $S_2' ...$ $S_n'$ und $S_2'' ... S_n''$ angehalten werden. Wenn sich ein reflektierendes Objekt bewegt und dementsprechend aus dem mittleren Teil-Meßbereich herauswandert, dann wird der daran reflektierte rücklaufende Lichtimpuls von einem der anderen Sätze von Rampenschaltungen erfaßt. Im linken Teil von Fig.6 ist zeitgedehnt der ausgesandte Lichtimpuls dargestellt. Dieser Teil von Fig.6 ist ähnlich Fig.3.

### Patentansprüche

1. Verfahren zum zeitlichen Erfassen von reflektierten Lichtimpulsen, die von einem Triggerimpuls ausgelöst und an einem Objekt reflektiert werden, wobei die rücklaufenden Lichtimpulse von einem Detektor (34) erfaßt werden und Detektorsignale liefern, unter Verwendung einer Grobmeßeinrichtung, mittels derer ein Grobmeßwert für die Pulslaufzeit gewonnen wird, und einer Feinmeßeinrichtung **dadurch gekennzeichnet, daß**

(a) ein Feinmeß-Triggerimpuls erzeugt wird, der einen von dem Objekt reflektierten Feinmeß-Lichtimpuls auslöst,

(b) eine Mehrzahl von analogen Rampenschaltungen (44,46) gleichzeitig nach einem von dem Grobmeßwert bestimmten, durch den Feinmeß-Triggerimpuls eingeleiteten Zeitintervall gestartet werden, wobei das Zeitintervall kleiner als der Grobmeßwert ist und der Arbeitsbereich der Rampenschaltung (44,46) den Grobmeßwert enthält, und

(c) die Ausgangssignale der Rampenschaltungen (44,46) gespeichert werden, wenn das von dem rücklaufenden Feinmeß-Lichtimpuls erzeugte Detektorsignal einen jeweils vorgegebenen Schwellwert überschreitet, wobei den verschiedenen Rampenschaltungen (44,46) unterschiedliche, gestufte Schwellwerte zugeordnet sind.

2. Verfahren nach Anspruch 1, **dadurch gekennzeichnet, daß** für die Grobmessung ebenfalls ein Grobmeß-Triggerimpuls erzeugt wird, der mittels eines vor- und rücklaufenden Grobmeß-Lichtimpulses den Grobmeßwert für die Pulslaufzeit liefert.

3. Verfahren nach Anspruch 2, **dadurch gekennzeichnet, daß**

(a) für die Grobmessung ein von einem Taktgenerator (12) beaufschlagter Zähler (10) durch den Grobmeß-Triggerimpuls zurückgesetzt und der Zählerstand dieses Zählers bei Auftreten des Detektorsignals gespeichert wird, das durch den reflektierten Grobmeß-Lichtimpuls hervorgerufen wird,

(b) bei dem Feinmeß-Triggerimpuls der Zähler (10) auf einen vorgegebenen, von null verschiedenen Zählerstand gesetzt wird und

(c) die Rampenschaltungen (44,46) gestartet werden, wenn der Zähler anschließend wieder den bei der Grobmessung gespeicherten Zählerstand erreicht.

4. Verfahren nach einem der Ansprüche 1 bis 3, **dadurch gekennzeichnet, daß**

(a) der Feinmeß-Triggerimpuls eine Jitter-Rampenschaltung (42) startet,

(b) der Feinmeß-Lichtimpuls gleichzeitig unmittelbar auf den Detektor (34) geleitet wird und

(c) das Ausgangssignal der Jitter-Rampenschaltung (42) gespeichert wird, wenn das von dem direkt auf den Detektor (34) geleiteten Feinmeß-Lichtimpuls erzeugte Detektorsignal einen vorgegebenen Schwellwert überschreitet.

5. Vorrichtung zum zeitlichen Erfassen von reflektierten Lichtimpulsen, die von einem Triggerimpuls ausgelöst und an einem Objekt reflektiert werden, bei welcher die rücklaufenden Lichtimpulse von einem Detektor (34) erfaßt werden und Detektorsignale liefern, mit einer Grobmeßeinrichtung, mittels derer ein Grobmeßwert für die Pulslaufzeit gewonnen wird, und einer Feinmeßeinrichtung, **gekennzeichnet durch**

(a) Mittel (26) zur Erzeugung eines Feinmeß-Triggerimpulses und und eine von dem Feinmeß-Triggerimpuls auslösbare gepulste Lichtquelle zur Erzeugung eines von dem Objekt reflektierten Feinmeß-Lichtimpulses,

(b) eine Mehrzahl von analogen Rampenschaltungen (44,46), die gleichzeitig nach einem von dem Grobmeßwert bestimmten, durch den Feinmeß-Triggerimpuls eingeleiteten Zeitintervall einschaltbar sind, wobei das Zeitintervall kleiner als der Grobmeßwert ist und der Arbeitsbereich der Rampenschaltung (44,46) den Grobmeßwert enthält, und

(c) Speichermittel zum Speichern der Ausgangssignale der Rampenschaltungen zu dem Zeitpunkt, wenn das von dem rücklaufenden Feinmeß-Lichtimpuls erzeugte Detektorsignal einen jeweils vorgegebenen Schwellwert überschreitet, wobei den verschiedenen Rampenschaltungen (44,46) unterschiedliche, gestufte Schwellwerte zugeordnet sind.

6. Vorrichtung nach Anspruch 5, **dadurch gekennzeichnet, daß** die Grobmeßeinrichtung Mittel (26) zum Erzeugen eines Grobmeß-Triggerimpulses aufweist, durch welchen an der gepulsten Lichtquelle ein Grobmeß-Lichtimpuls auslösbar ist, und Mittel zur Bildung des Grobmeßwertes für die Pulslaufzeit mittels des vor- und rücklaufenden Grobmeß-Lichtimpulses.

7. Vorrichtung nach Anspruch 6 **gekennzeichnet durch**

(a) einen von einem Taktgenerator (12) beaufschlagter Zähler (10), der durch den Grobmeß-Triggerimpuls zurücksetzbar ist,

(b) Zählerstand-Speichermittel (14) und Mittel (72) zum Übertragen des Zählerstandes dieses Zählers (10), die vom Auftreten des durch den reflektierten Grobmeß-Lichtimpuls hervorgerufenen Detektorsignals aktivierbar sind,

(c) Rücksetzmittel (76), die von dem Feinmeß-Triggerimpuls auslösbar sind und durch welche der Zähler (10) auf einen vorgegebenen, von null verschiedenen Zählerstand gesetzt wird und

(d) Mittel zum Starten der Rampenschaltungen (44,46), wenn der Zähler (10) anschließend wieder den bei der Grobmessung gespeicherten Zählerstand erreicht.

8. Vorrichtung nach einem der Ansprüche 4 bis 7, **dadurch gekennzeichnet,** daß der Lichtimpuls von der gepulsten Lichtquelle unmittelbar auf den Detektor (34) geleitet und eine Jitter-Rampenschaltung (42) vorgesehen ist, die durch den Triggerimpuls gestartet und durch das von der unmittelbaren Beaufschlagung mit dem Lichtimpuls hervorgerufene Detektorsignal angehalten wird.

**Claims**

1. A method for the detection in time of reflected light pulses which are released from a trigger pulse and are reflected from an object, the return light pulses being detected by a detector (34) and provide detector signals using a coarse measuring device, by means of which a coarse measured value is obtained for the pulse running time and a fine measuring device, **characterised in that,**

   (a) a fine measuring trigger pulse is generated which releases a fine measuring light pulse which is reflected by the object,

   (b) a plurality of analogue ramp circuits (44,46) are started simultaneously after a time interval determined by the coarse measured value and initiated by the fine measuring trigger pulse, the time interval being smaller than the coarse value and the operating range of the ramp circuits (44,46) including the coarse value and

   (c) the output signals of the ramp circuits (44,46) are stored. if the detector signal generated by the return fine measuring light pulse exceeds a predetermined threshold value, different stepped threshold values being allocated to the various ramp circuits (44,46).

2. A method according to claim 1, **characterised in that,** a coarse measuring trigger pulse is also generated for the coarse measurement, which provides the coarse measured value for the pulse running time by means of a forward and return coarse measuring light pulse.

3. A method according to claim 2, **characterised in that,**

   (a) a counter (10) to which a clock generator (12) is applied for the coarse measurement, is reset by the coarse measuring trigger pulse and the count of this counter is stored on the occurrence of the detector signal which is generated by the reflecting coarse measuring light pulse,

   (b) during the fine measuring trigger pulse, the counter (10) is set to a predetermined count other than zero and

   (c) the ramp circuits (44, 46) are started if the counter subsequently reaches the count saved during the coarse measurement

4. A method according to one of the claims 1 to 3, **characterised in that,**

   (a) the fine measuring trigger pulse starts a jitter ramp circuit (42)

   (b) the fine measuring light pulse is simultaneously directly guided to the detector (34)

   (c) the output signal of the jitter ramp circuit (42) is saved if the detector signal generated by the fine measuring light pulse which is guided directly to the detector, exceeds a predetermined threshold value.

5. A device for the detection in time of reflected light pulses which are released by a trigger pulse and reflected by an object in which the return light pulses are detected by a detector (34) and provide detector signals, with a coarse measuring device by means of which a coarse mcasured value is obtained for the pulse running time, and a fine measuring device, **characterised by**

   (a) means (26) for the generation of a fine measuring trigger pulse and a pulsed light source releasable by the fine measuring trigger pulse for the generation of a fine measuring light pulse reflected by the object,

   (b) a plurality of analogue ramp circuits arranged to be switched on simultaneously after a time interval determined by the coarsc measured value and initiated by the fine measuring trigger pulse, the time interval being smaller than the coarse value and the operating range

8

of the ramp circuits including the coarse value and

(c) a memory means for the storage of the output signal of the ramp circuits at the point in time when a predetermined threshold value is exceeded by the detector signal generated by the return fine measuring light pulse, different stepped threshold values being allocated to the various ramp circuits (44,46).

6. A device according to claim 5, **characterised in that,** the coarse measuring device is provided with a means (26) for the generation of a coarse measuring trigger pulse by which a coarse measuring light pulse is releasable from the pulsed light source and means for the forming of the coarse measured value for the pulse running time on the basis of the forward and return coarse measuring light pulse.

7. A device according to claim 6 **characterised by**

(a) a counter (10) connected to a clock generator (12), which is resetable by the coarse measuring trigger pulse

(b) a count storage means (14) and means (72) for the transmission of the count of this counter (10) which is activatable on the occurrence of a detector signal generated by the reflecting coarse measuring light pulse,

(c) reset means (76) which are releasable by the fine measuring trigger pulse and by means of which the counter (10) is set to a predetermined count other than zero and

(d) means for the starting of the ramp circuits (44,46) when the counter (10) reaches the count stored during the coarse measurement.

8. Device according to one of the claims 4 to 7, **characterised in that,** the light pulse from the pulsed light source is guided directly to the detector (34) and a jitter ramp circuit (42) is provided which is started by the trigger pulse and is stopped by the detector signal caused by the direct impingement of the light pulse.

**Revendications**

1. Procédé destiné à saisir dans le temps des impulsions photoniques réfléchies qui sont déclenchées par une impulsion de déclenchement et réfléchies sur un objet, les impulsions photoniques retour étant saisies par un détecteur (34) et livrant des signaux de détecteur, en utilisant une installation de mesure approximative, au moyen de laquelle est extraite une valeur de mesure approximative de la durée de propagation d'une impulsion, ainsi qu'une installation de mesure de précision,
    **caractérisé par le fait que**

(a) une impulsion de déclenchement de mesure de précision déclenchant une impulsion photonique de mesure de précision réfléchie par l'objet est générée,
(b) plusieurs circuits à rampe analogiques (44,46)sont mis en route simultanément après un intervalle de temps amorcé par l'impulsion de déclenchement de mesure de précision et déterminé par la valeur de mesure approximative, l'intervalle de temps étant inférieur à la valeur de mesure approximative et le rayon d'action du circuit à rampe (44,46) comprenant la valeur de mesure approximative, et
(c) les signaux de sortie des circuits à rampe (44,46) sont mémorisés quand le signal de détecteur généré par l'impulsion photonique de mesure de précision retour dépasse une valeur de seuil chaque fois prédonnée, différentes valeurs de seuil échelonnées étant associées aux divers circuits à rampe (44,46).

2. Procédé selon la revendication 1, **caractérisé par le fait qu'**une impulsion de déclenchement de mesure approximative est également générée pour le mesurage approximatif, impulsion livrant la valeur de mesure approximative de la durée de propagation d'une impulsion à l'aide d'une impulsion photonique de mesure approximative aller et retour.

3. Procédé selon la revendication 2, **caractérisé par le fait que**

(a) pour le mesurage approximatif, un compteur (10) auquel est appliqué un générateur de rythme (12) est reculé par l'impulsion de déclenchement de mesure approximative et la position de ce compteur est mémorisée lors de l'apparition du signal de détecteur provoqué par l'impulsion photonique de mesure approximative réfléchie,
(b) pour l'impulsion de déclenchement de mesure de précision, le compteur (10) est placé sur une position prédonnée différente de zéro et
(c) les circuits à rampe (44,46) sont mis en route lorsque le compteur finit par atteindre à nouveau la position mémorisée lors du mesurage approximatif.

4. Procédé selon l'une des revendications 1 à 3, **caractérisé par le fait que**

(a) l'impulsion de déclenchement de mesure de précision met en route un circuit à rampe à instabilité (42),

(b) l'impulsion photonique de mesure de précision est guidée en même temps directement sur le détecteur (34) et

(c) le signal de sortie du circuit à rampe à instabilité (42) est mémorisé lorsque le signal de détecteur généré par l'impulsion photonique de mesure de précision guidée directement sur le détecteur (34) dépasse une valeur de seuil prédonnée.

5. Dispositif destiné à saisir dans le temps des impulsions photoniques réfléchies qui sont déclenchées par une impulsion de déclenchement et réfléchies sur un objet, pour lequel les impulsions photoniques retour sont saisies par un détecteur (34) et livrent des signaux de détecteur, muni d'une installation de mesure approximative, au moyen de laquelle est extraite une valeur de mesure approximative de la durée de propagation d'une impulsion, et muni d'une installation de mesure de précision,

    **caractérisé par**

(a) des moyens (26) destinés à générer une impulsion de déclenchement de mesure de précision et une source de lumière pulsée de façon à être déclenchée par l'impulsion de déclenchement de mesure de précision et destinée à générer une impulsion photonique de mesure de précision réfléchie par l'objet,

(b) plusieurs circuits à rampe analogiques (44,46) susceptibles d'être mis en route simultanément après un intervalle de temps amorcé par l'impulsion de déclenchement de mesure de précision et déterminé par la valeur de mesure approximative, l'intervalle de temps étant inférieur à la valeur de mesure approximative et le rayon d'action du circuit à rampe (44,46) comprenant la valeur de mesure approximative, et

(c) des moyens de mémorisation destinés à mémoriser les signaux de sortie des circuits à rampe par rapport au moment où le signal de détecteur généré par l'impulsion photonique de mesure de précision retour dépasse une valeur de seuil chaque fois prédonnée, différentes valeurs de seuil échelonnées étant associées aux divers circuits à rampe (44,46).

6. Dispositif selon la revendication 5, **caractérisé par le fait que** l'installation de mesure approximative présente des moyens (26) destinés à générer une impulsion de déclenchement de mesure de précision par laquelle une impulsion photonique de mesure approximative est susceptible d'être déclenchée au niveau de la source de lumière pulsée, et des moyens destinés à former la valeur de mesure approximative de la durée de propagation d'une impulsion à l'aide de l'impulsion photonique de mesure approximative aller et retour.

7. Dispositif selon la revendication 6, **caractérisé par**

(a) un compteur (10) auquel est appliqué un générateur de rythme (12) susceptible d'être reculé par l'impulsion de déclenchement de mesure approximative,

(b) des moyens de mémoire de position du compteur (14) et des moyens (72) destinés à transmettre la position de ce compteur (10) et susceptibles d'être activés par l'apparition du signal de détecteur provoqué par l'impulsion photonique de mesure approximative réfléchie,

(c) des moyens de replacement (76) susceptibles d'être déclenchés par l'impulsion de déclenchement de mesure de précision par lesquels le compteur (10) est placé sur une position prédonnée différente de zéro et

(d) des moyens destinés à mettre en route les circuits à rampe (44,46) lorsque le compteur (10) finit par atteindre à nouveau la position mémorisée lors du mesurage approximatif.

8. Dispositif selon l'une des revendications 4 à 7, **caractérisé par le fait que** l'impulsion photonique est guidée directement sur le détecteur (34) par la source de lumière pulsée et qu'il est prévu un circuit à rampe à instabilité (42) qui est mis en route par l'impulsion de déclenchement et stoppé par le signal de détecteur provoqué par l'application directe avec l'impulsion photonique.

Fig. 1

Fig. 2

EP 0 578 150 B1

ZÄHLER

| 2 | 3 | 4 ........ $n_z$ |

START

TAKT (freilaufend)

92

A

TRIGGER

$S_1$

93

$A(t_P - t_T(L))$

98

94

$t_T(L)$

$\Delta t_L$

$t_P$

$t_P = t_T(L) + k \cdot A(t_P - t_T(L))$

Fig. 3

$$R = \frac{1}{2} \cdot C \cdot (t_R - t_P)$$

$$\Delta R = \frac{1}{2} \cdot C \cdot \Delta t_{R,P}$$

$$\Delta t_{R,P} = 1 \ldots 2 \ ns$$

$$\tau_{HW} \gg \Delta t_{R,P}$$

$$R = \frac{1}{2} \cdot C \cdot (t'_R - t'_P)$$

$$R = \frac{1}{2} \cdot C \cdot (t''_R - t''_P)$$

A

$S_1$

$\tau_{HW}$

93A

$t_P$

$S_n$
$S_5$
$S_4$
$S_3$
$S_2$

$t_R$ — 120

$t(S_2)$ $t(S_3)$

$t$

93B

$t'_P$

$S_n$
$S_5$
$S_4$
$S_3$
$S_2$

$t'_R$ — 122

$t(S_2)$ $t(S_3)$ $t(S_4)$ $t(S_5)$

$t$

93C

$t''_P$

$S_n$
$S_5$
$S_4$
$S_3$
$S_2$

$t''_R$ — 124

$t(S_2)$ $t(S_3)$

$t$

Fig. 4

EP 0 578 150 B1

ZÄHLER

$n_Z - 2$   $n_Z - 1$   $n_Z$   $n_Z + 1$   $n_Z + 2$

$\tau_{T,Z}$

GROBENTFERNUNG   134

TAKT
(freilaufend)

KOMPARATOR FF
$(n = n_Z)$

136

$A(S_4)$

$A(S_3)$

$A(S_2)$

$S_n$

$S_4$

$S_3$

$S_2$

126

$S_n$

$S_4$

$S_3$

$S_2$

128

130

132

$t_R$

$t_T(n_Z)$

$t(S_2)$  $t(S_3)$  $t(S_4)$

$\Delta t_R$

$$R = \frac{1}{2} \cdot C \cdot [(n_Z - 2) \cdot \tau_{T,Z} - \Delta t_L + \Delta t_R]$$

TRIGGER $S_2 \ldots S_n$

Fig. 5

Fig. 6